# EUROPEAN PATENT APPLICATION

(11) **EP 4 733 963 A1**
(43) Date of publication of application: **29.04.2026**
(21) Application number: 25207287.1
(22) Date of filing: 07.10.2025
(51) Int. Cl.: G06F 21/10, G06F 21/57, G06F 21/64, H04L 9/32

(54) **SOURCE DIFFERENTIATION FOR FAST DEVICE REPLACEMENT**

(30) Priority: 23.10.2024 US 202418924477
(71) Applicant: Schneider Electric USA, Inc., Andover, MA 01810 (US)
(72) Inventor: WHITE, Matthew L., Cary, NC, 27511 (US); JEFFERIES, Kevin M., Raleigh, NC, 27606 (US); HARRISON, Gregory, Andover, MA (US)
(74) Representative: Manitz Finsterwald Patent- und Rechtsanwaltspartnerschaft mbB

(57) **Abstract**

A method performed by a computing system and the computing system of a device coupled to a network for performing fast device replacement (FDR), including storing a cryptographic key set, accessing at least one signed replacement data set provided to a fast device replacement (FDR) storage device by respective one or more sources, verifying a source that provided a particular signed replacement data candidate of the at least one signed replacement data set that was accessed by verifying a cryptographic signature used to sign the particular signed replacement data candidate using a cryptographic algorithm and the stored cryptographic key set, and allowing fast device replacement using replacement data of the particular signed replacement data candidate pending verification of its associated cryptographic signature, and methods performed by and computing systems of the FDR storage system and a trusted tool configured to facilitate FDR to a plurality of devices.

## Description

### TECHNICAL FIELD

The present disclosure relates to fast device replacement of networked devices, and more particularly, to source differentiation for fast device replacement of networked devices.

### BACKGROUND

Fast device replacement (FDR) is a service provided by an FDR server that facilitates bringing modifiable devices into a modified condition for operation within a system. The FDR server, in response to a trigger, automatically retrieves, using on identification of the modifiable device, FDR data (also referred to as replacement data) that was previously stored and provides the retrieved FDR data to the modifiable device for configuration. The FDR data includes settings for configuring the modifiable device to be in the desired condition for operation.

Although the identity of the FDR service is unknown, the modifiable devices trust the FDR server. Without having verified the identity of the FDR server, there is a risk that the FDR server, either accidentally or maliciously, provided incorrect replacement settings. When incorrect replacement settings are used to configure a modifiable device, the modifiable device can be incorrectly modified for operation such that it cannot operate in its system or does not operate in accordance with a task it was intended to perform.

In addition to the risk of accidental or malicious configuration of the modifiable device, there is a lack of non-repudiation of the FDR data. There is also a lack of audit data that can provide information about the source of the FDR data, such as when investigating a problem. There is also a lack of correlation between how the FDR data is treated and identification of type of FDR source of the FDR data. The risks associated with FDR limit ways in which FDR can be used.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a computer-implemented method performed by a device coupled to a network for performing fast device replacement (FDR). The method includes storing a cryptographic key set, accessing at least one signed replacement data set provided to an FDR storage device by respective one or more sources, verifying a source that provided a particular signed replacement data candidate of the at least one signed replacement data set that was accessed by verifying a cryptographic signature used to sign the particular signed replacement data candidate using a cryptographic algorithm and the stored cryptographic key set, and allowing fast device replacement using replacement data of the particular signed replacement data candidate pending verification of its associated cryptographic signature.

In one or more embodiments, each cryptographic key of the cryptographic key set can be associated with a type of the source, and the type of the source associated with the cryptographic key of the cryptographic key set used to verify the source can be identified as the type of the source. The method can further include applying rules that define one or more conditions and/or a hierarchy of different types of sources associated with respective cryptographic keys of the cryptographic key set, wherein allowing the fast device replacement using the replacement data of the particular signed replacement data candidate can be governed by the rules.

In one or more embodiments, when the one or more conditions include the device is being newly coupled to the network, the rules can allow the replacement when the type of source identified is a class of devices to which the device belongs or a trusted tool, and when the one or more conditions include the device has been previously coupled to the network, the rules can allow the replacement when the type of source identified is the device or the trusted tool.

In one or more embodiments, the device can be configured with the rules as a factory setting or via user configuration.

In one or more embodiments, each cryptographic key of the cryptographic key set can be associated with identification and/or a type of the source. The method can further include recording an indication of whether the verification was successful with the identification and/or type of the source associated with a cryptographic key of the cryptographic key set that was used for verifying the source.

In one or more embodiments, the type of the source identified can be a class of the source or a trusted tool, and when the type of the source identified is the class of the source, verifying the source can further include determining whether the class of the source belongs to an allowable class of devices for the device, and when the type of the source identified is a trusted tool, verifying the source can further include determining whether the trusted tool is trusted by the device.

In one or more embodiments, the method can further include storing device replacement data, signing the device replacement data using a device key that is unique to the device and is included with the cryptographic key set, configuring the FDR storage device by causing to be stored the signed device replacement data with the signed replacement data set in the FDR storage device.

In one or more embodiments, the cryptographic key set, the keys used for signing the signed replacement data included in the signed replacement data set, and the cryptographic algorithm can be configured to use asymmetric keys or use symmetric keys with a keyed hash.

In one or more embodiments, the method can further include requesting performance of an FDR procedure using replacement data from the FDR storage device, wherein the at least one signed replacement data set can be accessed responsive to the request.

In one or more embodiments, the particular signed replacement data candidate can include an update to a selected data field of a plurality of data fields stored by the device, and allowing the fast device replacement can include updating the selected data field using the particular signed replacement data candidate.

In one or more embodiments, the device can be a plurality of devices, and the source can be configured to provide the particular signed replacement data candidate to the FDR storage device one time for causing an update to the selected data field of each of the plurality of devices.

In one or more embodiments, a command can cause the plurality of devices to access the particular candidate replacement data set by a PUSH action from the FDR storage device or a PULL action from the plurality of devices.

In an additional aspect, a computer system of the device is disclosed. The computer system includes a memory configured to store a plurality of programmable instructions and a processing device in communication with the memory, wherein the processing device, upon execution of the plurality of programmable instructions, is configured to perform the method that is disclosed for being performed by the device.

In accordance with still a further aspect of the disclosure, a non-transitory computer readable storage medium and one or more computer programs embedded therein is provided, which when executed by a computer system, cause the computer system to perform the method that is disclosed for being performed by the device.

In accordance with another aspect of the disclosure, a method is disclosed that is performed by an FDR storage device for providing a replacement data set to a device when the device is coupled to a network. The method includes storing a plurality of signed replacement data sets, each replacement data set signed by a corresponding source using the source's cryptographic key and having a corresponding data identifier that identifies the replacement data set and providing to a device one or more candidate signed replacement data sets from the plurality of signed replacement data sets. The respective one or more candidate replacement data sets are evaluated by the device using a cryptographic algorithm and locally stored cryptographic verification key via one or more attempts to verify any of the one or more candidate signed replacement data sets, and the device is configured to allow fast device replacement only when using the one or more candidate replacement data sets that were verified.

In one or more embodiments, the respective source's cryptographic keys can be private keys that identify the source or a class of the source.

In one or more embodiments, the method can further include receiving a request for a replacement data set from a device of a plurality of candidate devices, wherein the request can include an indication of an aspect of the device, selecting the candidate replacement data sets from the plurality of replacement data sets uses the indication of the aspect of the device.

In one or more embodiments, the aspect of the device can include identification of the device or identification of a class of the device.

In one or more embodiments, the one or more candidate replacement data sets can include an update to a selected data field of a plurality of data fields stored by the device, and when the device allows the fast device replacement using a particular candidate signed replacement data set, the selected data field can be caused to be updated using the particular signed candidate replacement data set.

In one or more embodiments, providing to the device one or more candidate signed replacement data sets can include providing the one or more candidate signed replacement data sets to a plurality of devices, and wherein the plurality of devices can be configured to evaluate the one or more candidate signed replacement sets using the cryptographic algorithm and their corresponding locally stored cryptographic verification key to attempt to verify any of the one or more candidate replacement data sets, and the respective plurality of devices can be configured to allow fast device replacement only when using the one or more candidate signed replacement data sets that were verified by the corresponding device.

In one or more embodiments, the method can further include receiving a command, wherein providing the one or more candidate replacement data sets to the plurality of devices can be performed responsive to the command by a PUSH action.

In an additional aspect, a storage system of the FDR storage device is disclosed. The storage system includes a memory configured to store a plurality of programmable instructions and a processing device in communication with the memory, wherein the processing device, upon execution of the plurality of programmable instructions, is configured to perform the method that is disclosed for being performed by the storage system.

In accordance with still a further aspect of the disclosure, a non-transitory computer readable storage medium and one or more computer programs embedded therein is provided, which when executed by a computer system, cause the computer system to perform the method that is disclosed for being performed by the storage system.

In a further aspect, a method performed by a trusted tool is disclosed. The method includes storing locally a cryptographic key that is unique to or otherwise identifies the trusted tool or a group of tools to which the trusted tool belongs, obtaining or generating a tool-provided replacement data set, signing the tool-provided replacement data set using the cryptographic key, and storing remotely in an FDR storage device the signed tool-provided replacement data set, wherein a device of a plurality of devices coupled to a network is configured to access the signed tool-provided replacement data set from a plurality of replacement data sets stored by the FDR storage device, and the device is configured to allow fast device replacement only when using the signed tool-provided replacement data set if the device successfully uses a cryptographic algorithm and a verification cryptographic key stored locally by the device to verify the signed tool-provided replacement data set.

In one or more embodiments, the tool-provided replacement data set can include an update to a selected data field of a plurality of data fields stored by the device, wherein the device can include one or more devices, and the one or more devices can be configured to allow the fast device replacement for updating the selected data field using the tool-provided replacement data set.

In one or more embodiments, the method can further include commanding the FDR storage device to cause the update to the selected data field of the plurality of devices using the signed tool-provided replacement set.

In a further aspect, a computer system of the trusted tool is disclosed. The computer system of the trusted tool includes a memory configured to store a plurality of programmable instructions, and a processing device in communication with the memory, wherein the processing device, upon execution of the plurality of programmable instructions, is configured to perform the method that is disclosed for being performed by the trusted tool.

In accordance with still a further aspect of the disclosure, a non-transitory computer readable storage medium and one or more computer programs embedded therein is provided, which when executed by a computer system, cause the computer system to perform the method that is disclosed for being performed by the trusted tool.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.
FIG. 1 is a block diagram illustrating a fast device replacement (FDR) system for performing source differentiation for FDR operations, in accordance with embodiments of the disclosure;
FIG. 2 is a flowchart showing an example method performed during an FDR operation by a target device for an example use case, in accordance with embodiments of the disclosure;
FIG. 3 is a flowchart showing an example method performed during an FDR operation by a target device for another example use case, in accordance with embodiments of the disclosure;
FIG. 4A is a flowchart showing an example method performed by a target device for performing an FDR operation to the device, in accordance with embodiments of the disclosure;
FIG. 4B is a flowchart showing an example method performed by an FDR database for performing an FDR operation to the target device, in accordance with embodiments of the disclosure;
FIG. 4C is a flowchart showing an example method performed by a trusted engineering tool for performing an FDR operation to one or more target devices, in accordance with embodiments of the disclosure;
FIGS. 5-8 are flow diagrams showing example methods performed during an FDR operation by source and target devices for different respective use cases, in accordance with embodiments of the disclosure;
FIG. 9 is a block diagram of an exemplary processing system that could be used by a data source, target device, or FDR storage involved in an FDR operation, in accordance with embodiments of the disclosure.

Identical reference numerals have been used, where possible, to designate identical elements that are common to the figures. However, elements disclosed in one embodiment may be beneficially utilized on other embodiments without specific recitation.

### DETAILED DESCRIPTION

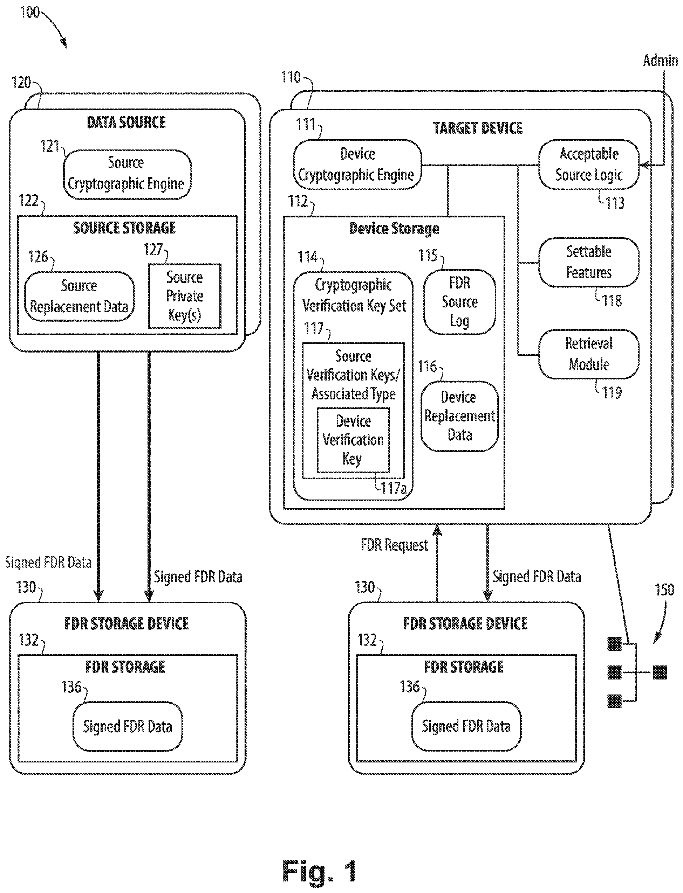

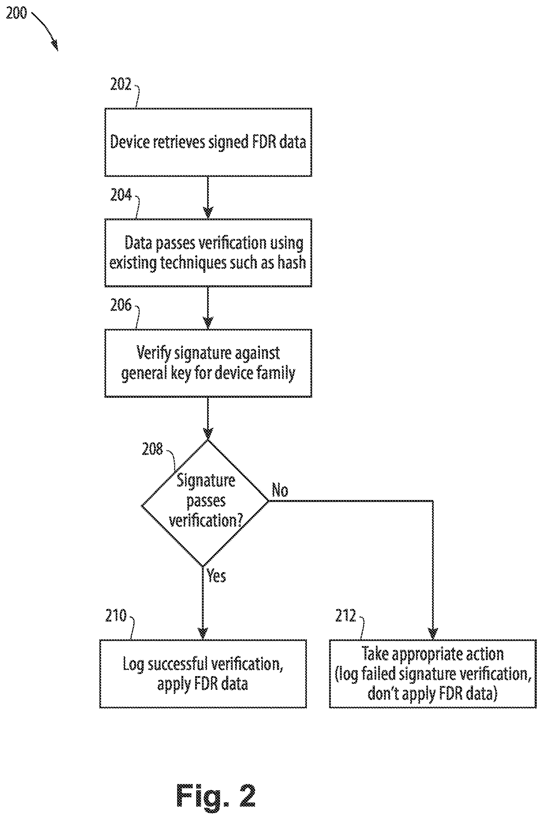

Reference will now be made to the drawings wherein like reference numerals identify similar structural features or aspects of the subject disclosure. For purposes of explanation and illustration, and not limitation, a block diagram of an exemplary embodiment of a fast device replacement (FDR) system in accordance with the disclosure is shown in FIG. 1 and is designated generally by reference character 100. Other embodiments of FDR system 100 in accordance with the disclosure, or aspects thereof, are provided in FIGS. 2-9, as will be described.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, exemplary methods and materials are now described.

It must be noted that as used herein and in the appended claims, the singular forms "a," "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth. It is to be appreciated the embodiments of this disclosure as discussed below are implemented using a software algorithm, program, or code that can reside on a computer useable medium for enabling execution on a machine having a computer processor. The machine can include memory storage configured to provide output from execution of the computer algorithm or program.

As used herein, the term "software" is meant to be synonymous with any logic, code, or program that can be executed by a processor of a host computer, regardless of whether the implementation is in hardware, firmware or as a software computer product available on a memory storage device or for download from a remote machine. The embodiments described herein include such software to implement the equations, relationships, and algorithms described above. One skilled in the art will appreciate further features and advantages of the disclosure based on the above-described embodiments. Accordingly, the disclosure is not to be limited by what has been particularly shown and described, except as indicated by the appended claims.

FDR system 100 includes one or more target devices 110, at least one data source 120, and an FDR storage device 130. Target device(s) 110 can belong to one or more systems 150. Target device(s) 110 are real or virtual devices that includes hardware, software, and/or firmware, and is capable of verifying cryptographically signed messages. Usage of the term "sign" (in its various grammatical forms) with respect to FDR data refers to cryptographic signing, and is not limited to a particular method of cryptographic signing, Target device(s) 110 can be coupled by wired and/or wireless communication couplings to system 150, e.g., via a private or public network, local area network (LAN), wide area network (WAN), cellular network, mesh network. etc.

Target device(s) 110 and data source(s) 120 can communicate with FDR storage device 130 via one or more networks using wired and/or wireless communication couplings. Some examples of networks include, without limitation, a private or public network, local area network (LAN), wide area network (WAN), cellular network, mesh network, etc.

In certain embodiments system 150 is an operational technology (OT) system, such as an industrial system, a data center, a utility system, a hospital system. Target device 110 can be coupled to system 150 via the industrial internet of things (IIOT). Target device 110 can be an OT device such as, without limitation, a circuit breaker, a motor-control center, a gateway, a PLC, a safety system, a building management controller, an edge device, a field device (e.g., sensor, actuator, or alarm), etc.

In certain embodiments, system 150 is an information technology (IT) system. Target device 110 can be coupled to system 150 via the internet of things (IOT). Target device 110 can be an IT device, such as a mobile phone, tablet, personal computer, server, etc.

Each data source 120 is a real or virtual device that includes hardware, software, and/or firmware, and is capable of cryptographically signing messages. Data source 120 includes a source cryptographic engine 121 and source storage 122. Source storage 122 includes source replacement data 126 and one or more source private keys 127. It is noted that during an FDR operation, certain data sources 120 can operate as a target device 110. Data sources 120 can be mobile or stationary computing devices, such as an IT or OT device. The data sources 120 can each be of a different type. Device 110 stores a type of a data source in association with its corresponding verification key. When verification is performed using a verification key, the associated type indicates the type of the data source.

Source storage 122 stores source replacement data 126 and the data source 120's own private key, referred to as source private key 127. Source cryptographic engine 121 uses a cryptographic algorithm and source private key 127 to sign source replacement data 126, which is then provided to FDR storage device 130. Source private key 127 can be unique to the source device or one or more classes of source devices, a group of classes of source devices. Thus, source private key 127 can identify the source device or a class (or group of classes) to which the source device belongs.

The source replacement data 126 can be obtained from settings of settable features (not shown) of data source 120 or can be entered and stored by an authorized administrator or at the time of manufacture. Source private key 127 can be entered and stored by an authorized administrator or at the time of manufacture.

FDR storage device 130 includes hardware, software, and/or firmware for storing or accessing FDR storage 132, receiving and storing signed FDR data, selecting signed FDR data sets, and providing the selected signed FDR data sets to a target device 110. FDR storage 132 stores signed FDR data received from one or more data sources 120. FDR storage device 130 can be configured as a programmable logic controller (PLC) that includes storage or accesses storage. FDR storage 132 can be integrated with FDR storage device 130 or can be external from and coupled to (via wireless and/or wired couplings) FDR storage device 130.

The signed FDR data can be provided from data sources 120 to FDR storage device 130 by a push or pull operation. The push or pull operation can be triggered by user action or a scheduled or non-scheduled event. An FDR operation directed at an identified target device 110 can be initiated by a request from the target device 110 (which can be responsive to a user action or triggered by another condition), a determination by FDR storage device 130, or an instruction form an external processing device (not shown). Once an FDR operation is initiated, FDR storage device 130 uses identification of the target device 110 to select signed FDR data from the stored signed FDR data 136 and provides the selected signed FDR data to the target device 110 as a signed FDR data set. A device identifier that identifies the target device 110 can be determined, based on, for example, a setting established by physical dials or the like, physical position in a system (e.g., as determined by a network topology discovery process), network position (e.g., address, information of neighbors in a daisy chain network), etc.). A class identifier that identifies a class to which the device belongs can also be determined similarly to determination of the device identifier and/or by determining a class identifier associated with the device identifier, e.g., by a lookup process in which a data structure (e.g., a table or the like) is consulted. Respective sets of the stored FDR data can have a data identifier, such as an index, key, address, record locator or the like. The data identifiers can be stored and associated with the respective signed replacement data sets. Thus, the stored FDR data can be correlated to the target device 110 using a device identifier or class identifier of the target device 110.

The data source 120's ID can be cryptographically signed. In one or more embodiments, the signing can be performed using a source private key 127 and can be verified using a corresponding source verification key 117, wherein the device private key 127 and source verification key 117 are an asymmetric cryptographic key pair. Source verification key 117 can be a secret key.

In one or more embodiments, the signing can be performed using a hash-based message authentication code (HMAC) function in which a hash function is applied to a secret key and a message. In this embodiment, the data source 120 and the target device 110 are configured to use symmetric keys (meaning source private key 127 and source verification key 117 used to sign and verify the FDR data are symmetric secret keys.) Different symmetric secret keys can be used to sign different instances of the FDR within a signed FDR data set. Management of an HMAC that is specific to the target device 110, including constraints on the design and process of target device 110, is comparable to management of a private key for target device 110.The secret keys can be provided or created at manufacturing. The secret keys used for the HMAC function need to be deployed securely and maintained protected due to their symmetry. Reference throughout the disclosure referring to cryptographic signing and/or keys (e.g., verification and private keys) can be interpreted to refer to using a HMAC function in which the verification and private keys stored by data source 120 and target device 110 are symmetric secret keys.

In one or more embodiments, the settings can be signed by the source private key 127 and can be verified using the corresponding source verification key 117, In one or more embodiments, the signed FDR data can include the data source 120's ID and/or the settings, wherein at least one of the data source 120's ID and the settings is signed by the device private key 127.

Target device 110 includes a device cryptographic engine 111, a device storage 112, acceptable source logic module 113, settable features 118, and a retrieval module 119. Device storage 112 includes cryptographic verification key set 114, an FDR source log 115, and device replacement data 116. Device storage 112 stores cryptographic verification key set 114 having one or more cryptographic source verification keys 117, including target device 110's own verification key, referred to as device verification key 117a, and verification keys for other sources.

The source verification keys 117 are also stored with an associated source type, When a source verification key 117 is used successfully to verify signed one of one or more candidate FDR data instances included in a signed FDR data set received by a target device 110, the type associated with that source verification key 117 indicates the type of data source 120 that is the source of the verified signed FDR data.

The source type can be, for example (without limitation), self (meaning the target device 110 is also the source of the signed FDR data verified using the source verification key 117), one or more classes (also referred to as family, meaning the target device 110 belongs to the same class as the source of the signed FDR data that was verified using the source verification key 117), an engineering tool (meaning the source of the signed FDR data that was verified using the source verification key 117 is an engineering tool that is trusted by the target device 110). The type associated with device verification key 117a is self, meaning the particular target device 110 is the data source 120 that provided the signed FDR data set.

Regarding the source type class, data sources 120 or target devices 110 having the same class type can be devices included in a system 150 that have certain features that are the same (e.g., same make and model, same function, and/or same position in a hierarchy). For example, a factory can have multiple actuators of the same make and model that belong to a first class and multiple controllers of the same make and model that belong to a second class.

In another example use case, OT systems requiring high availability can be modular and have replaceable functional units, which can be swapped in and configured using an FDR operation. An example is a motor control center which is designed in removable and replaceable compartments (also referred to as buckets or drawers). Spare buckets can be available and put into use if an operating bucket needs replacement. Buckets in motor control centers can be assemblies having many components that include electrical equipment. Often, the electrical equipment includes digitally configurable devices, such as motor overload relays. The digitally configurable devices can retrieve settings and information required to correctly operate and protect a load which is electrically connected to the bucket. During an FDR operation, an entire bucket, can be removed and replaced with another (e.g., a spare) bucket that has the same components. When the spare bucket is installed to replace the existing bucket, each of the digitally configurable devices of the spare bucket operates as a target device 110. When retrieving settings for the digitally configurable devices of the spare bucket, a determination is made for each of the digitally configurable devices whether it belongs to a same class or type as a corresponding digitally configurable device it is replacing.

Cryptographic verification key set 114 can include multiple source verification keys 117 that have a source type class for different respective classes to which target device 110 belongs. The different classes can completely or partially intersect or can be disjoint.

The device replacement data 116 can be obtained from settings of settable features 118 or can be entered and stored by an authorized administrator or at the time of manufacture. Cryptographic verification key set 114 can be entered and stored by an authorized administrator or at the time of manufacture.

Device cryptographic engine 111 uses a cryptographic algorithm and one or more cryptographic source verification keys 117 from cryptographic verification key set 114 to verify signed FDR data sets received from FDR storage device 130. Acceptable source logic module 113 uses the source type associated with any of the cryptographic source verification keys 117 that successfully in verified the signed FDR data set. Acceptable source logic module 113 applies rules that determine, based on the source type of the source or device key that was used to successfully verify the signed FDR data set, how the FDR data of the signed FDR data set that was successfully verified can be used. An example of application of this logic and logic used by the FDR storage device 130 and an engineering tool (configured to facilitate FDR for a plurality of target devices 110) is shown and described with respect to FIGS. 2 - 4C.

Application of this logic allows data source 120 to be differentiated from untrusted data sources and from other data sources. The differentiation allows rejection of signed FDR data sets that was stored in FDR storage device 130 by an untrusted data source. The differentiation further allows differentiation of different trusted data sources 120, causing the target device 110 to apply different rules for the respective different trusted data sources. In this way, target device 110 can behave in accordance with a first set of rules associated with a first trusted data source 120 and in accordance with a second set of rules associated with a second trusted data source 120, wherein the first set of rules is different from the second set of rules.

Device cryptographic engine 111 can further use device key 117 to sign device replacement data 116 when target device 110 behaves as a data source 120. When operating as a data source 120, target device signs the device replacement data 116 and then provide it to FDR storage device 130 as signed FDR data.

FDR source log 115 includes, in addition to other possible useful data, time stamped identification of the data source 120 that provided signed FDR data to target device 110 as indicated by being associated with a source verification key 117 that was successfully verified. The timestamp can indicate, for example, a time (e.g., date and time) when the signed FDR data set was received or a time when the verification was successfully performed. Successful verification of the signed FDR data set can result in verifying and determining a type of the source.

Device replacement data 116 is stored 110 for future use at a time when its host target device 110 behaves as a data source 120. When the host target device 110 behaves as a data source 120, the host target device 110 retrieves the device replacement data 116 from device storage 112, signs the retrieved device replacement data 116, and provides the signed device replacement data to FDR storage device 130 for a future FDR operation.

Settable features 118 are hardware, software, and/or firmware features of target device that can be configured with different settings. During an FDR operation, settable features 118 are set using an FDR data set obtained from the signed FDR data set from FDR storage device 130, contingent upon verification of a source of the signed FDR data set.

With reference now to FIGS. 2-8, shown are flowcharts demonstrating implementation of the various exemplary embodiments. It is noted that the order of operations shown in FIGS. 2-8 is not required, so in principle, the various operations may be performed out of the illustrated order. Also certain operations may be skipped, different operations may be added or substituted, some operations may be performed in parallel instead of strictly sequentially, or selected operations or groups of operations may be performed in a separate application following the embodiments described herein.

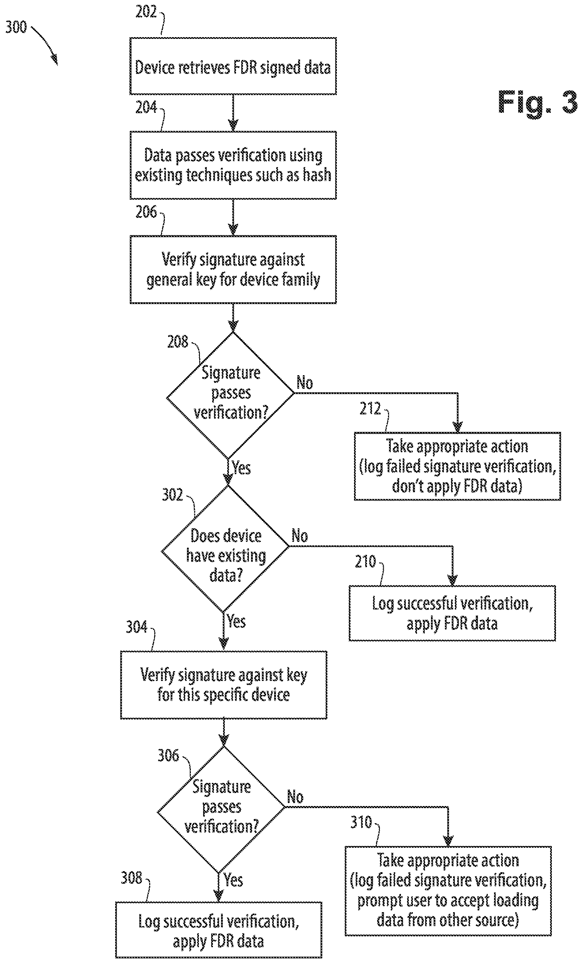

Language that refers to the exchange of information (providing or receiving) is not meant to be limiting and can refer to push or pull operations. FIGS. 2 and 3 show flowcharts 200 and 300, respectively, of example methods, in accordance with certain embodiments, for performing an FDR operation by a target device (referred to as a device), such as target device 110 shown in FIG. 1. The logic applied in flowcharts 200 and 300 can be provided by acceptable source logic module 113 shown in FIG. 1. The methods shown in flowcharts 200 and 300 are merely exemplary and are not intended to limit the disclosure to the particular logic shown. Instead, flowcharts 200 and 300 are meant to demonstrate that decisions about which FDR data to apply, or not, and what and when to log regarding data sources can be in accordance with application of logic provided by acceptable source logic module 113. The logic used by acceptable source logic module 113 can be customizable and configurable.

With reference to FIG. 2, at block 202, the device receives signed FDR data, such as by receiving a signed FDR data set from an FDR storage device, such as shown in FIG. 1 with respect to FDR storage device 130. The signed FDR data that was received can include multiple FDR data that are each signed by a respective data source (such as data sources 120 shown in FIG. 1). At block 204, the signed FDR data passes verification using existing techniques, such as hash. These techniques can verify that the signed FDR data was not tampered with or corrupted, but it does not determine or verify a source of the signed FDR data.

At block 206, an attempt is made to verify a signature used to sign the FDR data by attempting to verify the signed FDR data using a source verification key having an associated general class type (also referred to as a general key). The general class type represents a general class to which the device belongs. The general key is included with one or more cryptographic source verification keys (such as source verification keys 117 shown in FIG. 1) stored by the device.

At block 208, a determination is made whether the verification performed at block 206 was successful. The method continues at block 210 when it is determined at block 208 that the verification was successful. At block 210, a successful verification is logged, such as in FDR source log 115 shown in FIG. 1. Data logged can include, for example, results of the signature verification and any decisions that were taken based on a successful verification. Additionally, the FDR data obtained by verifying the received signed FDR data is applied, such as by configuring settings for features of the device (such as configuring settings of settable features 118 shown in FIG. 1).

The method continues at block 212 when it is determined at block 208 that the verification was not successful. At block 212, a failed verification is logged. FDR data is not applied to features of the device.

Accordingly, any decision taken by the device regarding the FDR data signature verification and application can be logged to allow for future auditing. In a scenario in which the device accepts FDR data from its self-signed data, there is one verification result and decision point that is logged. in a scenario in which the device can accept data from itself or from another device of the same class, verification results are logged for both the self-signed data and the data from the other device and any ensuing decision points.

FIG. 3 shows a flowchart 300 of another example method, in accordance with certain embodiments, for performing an FDR operation by a target device (referred to as a device), such as target device 110 shown in FIG. 1.

The method includes performing blocks 202, 204, 206, 208, and 212 as described with respect to FIG. 2. Following block 208, the method continues at block 302 when it is determined at block 208 that the verification was successful. At block 302, a determination is made whether the device has existing data, meaning configuration of the device was previously performed such that settings of features of the device (such as settable features 119 shown in FIG. 1) have been previously provided with settings. The method continues with block 210 when it is determined at block 302 that the device does not have existing data, which indicates that the device has not been previously configured, such as for a brand new device after being unboxed or an unformatted device after being unformatted.

The method continues at block 304 when it is determined at block 302 that the device does have existing data. At block 304, an attempt is made to verify a signature used to sign the FDR data by attempting to verify the signed FDR data using the device's own key (such as device verification key 117a shown in FIG. 1) as a source verification key.

At block 306, a determination is made whether the verification performed at block 304 was successful. The method continues at block 308 when it is determined at block 306 that the verification was successful. At block 308, a successful verification and any ensuing decision is logged, such as in FDR source log 115 shown in FIG. 1. Additionally, the FDR data obtained by verifying the received signed FDR data is applied, such as by configuring settings for features of the device (such as configuring settings of settable features 118 shown in FIG. 1).

The method continues at block 310 when it is determined at block 306 that the verification was not successful. At block 310, a failed verification is logged. FDR data is not applied to features of the device. Instead, a user of the device can be prompted to accept loading data for configuring the device from another source.

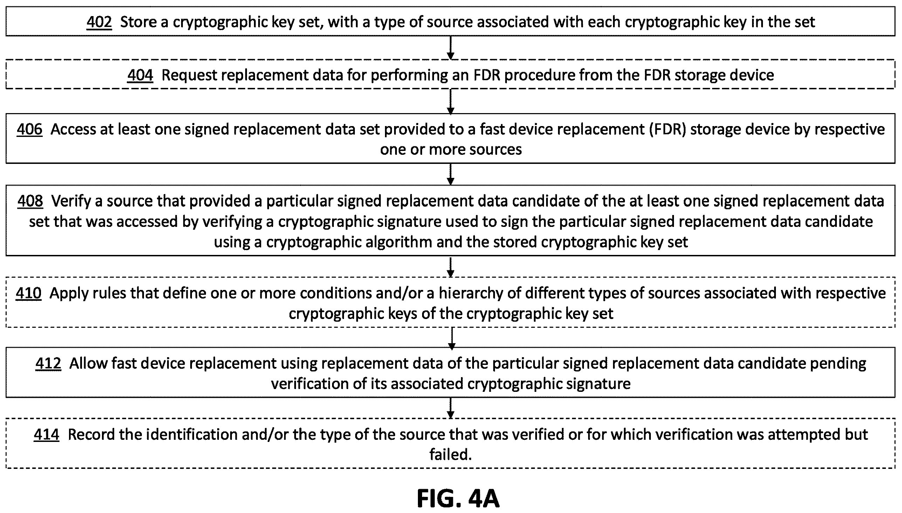

With reference to FIG. 4A, a flowchart is provided that shows an example method performed by a device coupled to a network for performing FDR. The example can be a target device (such as target device 110 shown in FIGS. 1 and 2). At block 402, a cryptographic key set (such as cryptographic key set 114 shown in FIG. 1) is stored by the device.

At optional block 404, in one or more embodiments, a request is submitted for performance of an FDR procedure using replacement data from an FDR storage device (such as FDR storage device 130 shown in FIGS. 1 and 2). The request can be submitted by the device (e.g., responsive to a user action or triggered by another condition), and or can be submitted by a different device or process that is external to the device.

At block 406, at least one signed replacement data set that was provided to the FDR storage device by respective one or more sources is accessed.

The cryptographic key set, keys used for signing the signed replacement data included in the signed replacement data set, and the cryptographic algorithm can be configured to use asymmetric keys or can be configured to use symmetric keys with a keyed hash, for example.

At block 408, verification is performed of the source that provided a particular signed replacement data candidate of the at least one signed replacement data set that was accessed. The verification includes verifying a cryptographic signature used to sign the particular signed replacement data candidate using a cryptographic algorithm and the stored cryptographic key set.

At optional block 410, in one or more embodiments, the device applies rules that define one or more conditions and/or a hierarchy of different types of sources associated with respective cryptographic keys of the cryptographic key set. The allowance of the fast device replacement using the particular signed data candidate is governed by the rules. In one example, when the one or more conditions include the device is being newly coupled to the network, the rules allow the replacement when the type of source identified is a class of devices to which the device belongs or a trusted tool. In another example, when the one or more conditions include the device has been previously coupled to the network, the rules allow the replacement when the type of source identified is the device or the trusted tool.

In one or more embodiments, the device can be configured with the rules as a factory setting or via user configuration. In one or more embodiments, the type of the source identified is a class of the source, the device, or a trusted engineering tool. When the type of the source identified is the class of the source, verifying the source further includes determining whether the class of the source belongs to an allowable class of devices for the device. When the type of the source identified is a trusted engineering tool, verifying the source further includes determining whether the trusted engineering tool is trusted by the device.

In one or more embodiments, the source stores the device replacement data in the FDR storage device. Before storing the device replacement data, the source signs the device replacement data using a device key that is unique to the device and is included with the device's cryptographic key set. In one or more embodiments, the source is the device. The method performed by the device can include configuring the FDR storage device by causing the signed device replacement data to be stored with the signed replacement data set in the FDR storage device.

At block 412, fast device replacement is allowed using replacement data of the particular signed replacement data candidate pending verification of its associated cryptographic signature. In other words, the fast device replacement is only allowed if the verification is successful.

At optional block 414, the identification of the type of the source is recorded along with an indication of whether verification of the source was successful or failed.

Each cryptographic key of the cryptographic key set is associated with identification and/or a type of the source. Accordingly, recording the indication of whether the verification was successful can include storing the indication with the identification and/or type of the source associated with a cryptographic key of the cryptographic key set that was used for verifying the source. In this way, an indication that the verification was successful or was unsuccessful that has been recorded includes identification and/or type of the source associated with the cryptographic key that was used to attempt the verification.

In an example, the particular signed replacement data candidate includes an update to a selected data field of a plurality of data fields stored by the device. In this example, allowing the fast device replacement includes updating the selected data field using the particular signed replacement data candidate.

In an example, the device is a plurality of devices. In this example, the source is configured to provide the particular signed replacement data candidate to the FDR storage device a single time for causing an update to the selected data field of each of the plurality of devices.

In an example, a command causes the plurality of devices to access the particular candidate replacement data set by a PUSH action from the FDR storage device or a PULL action from the plurality of devices.

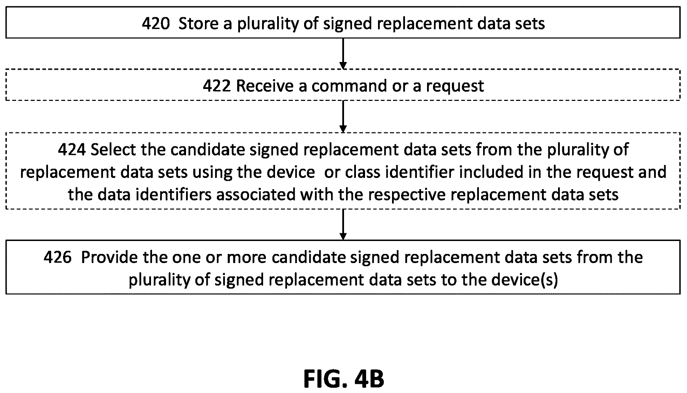

With reference to FIG. 4B, a flowchart is provided that shows an example method performed by an FDR storage device (such as FDR storage device 130 shown in FIGS. 1 and 2) for providing one or more candidate signed FDR data sets to a device that is coupled to a network. The device can be a target device (such as target device 110 shown in FIGS. 1 and 2). At block 420, a plurality of signed replacement data sets are stored, wherein each signed replacement data set is signed by a corresponding source using the source's cryptographic key. The source can belong to a particular class of sources of a variety of different classes.

In one or more embodiments, a data identifier, such as an index, key, address, record locator or the like can be stored and associated with the respective signed replacement data sets, and can be used to select candidate signed replacement data sets to provide to the device using a device identifier that identifies the device or a class of the device.

At optional block 422, a request or a command is received. The request can be received from a device of a plurality of candidate devices, requesting one or more candidate signed FDR data sets. The request can include an indication of an aspect of the device. This command can trigger provision, optionally via a PUSH action, of one or more candidate replacement data sets to a plurality of devices. The aspect of the device can include, for example, an identifier of the device and/or its class.

At optional block 424, the candidate replacement data sets are selected from the plurality of replacement data sets using the device or class identifier included in the request and the data identifiers associated with the respective replacement data sets, e.g., when there is a match or other correlation.

At block 426, the selected one or more candidate signed replacement data sets from the plurality of signed replacement data sets are provided to the device. The respective one or more candidate signed replacement data sets are evaluated by the device(s) using a cryptographic algorithm and locally stored cryptographic verification key via one or more attempts to verify any of the one or more candidate replacement data sets. The device(s) are configured to allow fast device replacement only when using the one or more candidate replacement data sets that were verified.

In an example, the one or more candidate replacement data sets includes an update to a selected data field of a plurality of data fields stored by the device. When the device allows the fast device replacement using a particular signed candidate replacement data set, an update to the selected data field is caused using the particular signed candidate replacement data set. The update can be performed via a push or pull operation. The device can be caused to update itself, or the update can be performed by the FDR storage device 130 or other external device (not shown).

In an example, the one or more devices is a plurality of devices. The plurality of devices are configured to evaluate the one or more candidate signed replacement sets using the cryptographic algorithm and their corresponding locally stored cryptographic verification key to attempt to verify any of the one or more candidate replacement data sets. The respective plurality of devices are configured to allow fast device replacement only when using the one or more candidate signed replacement data sets that were verified by the corresponding device.

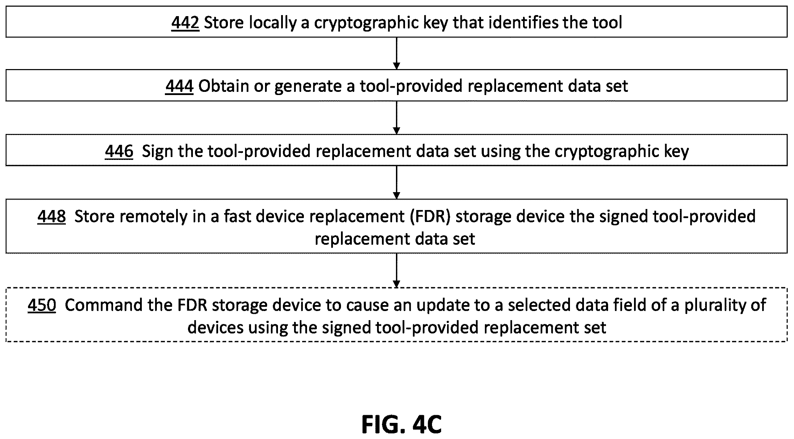

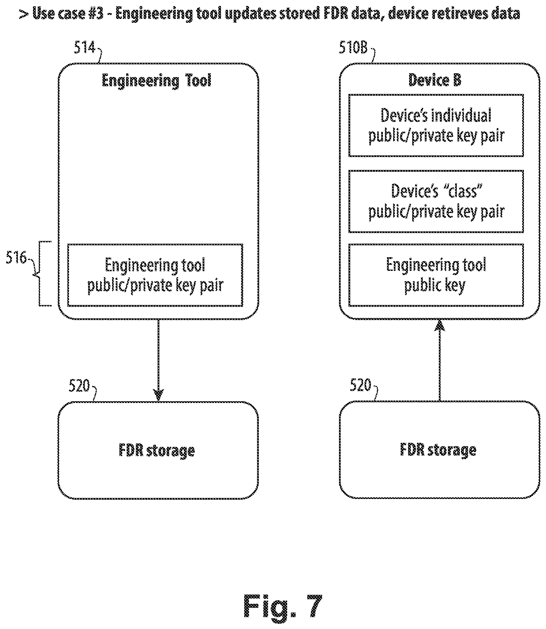

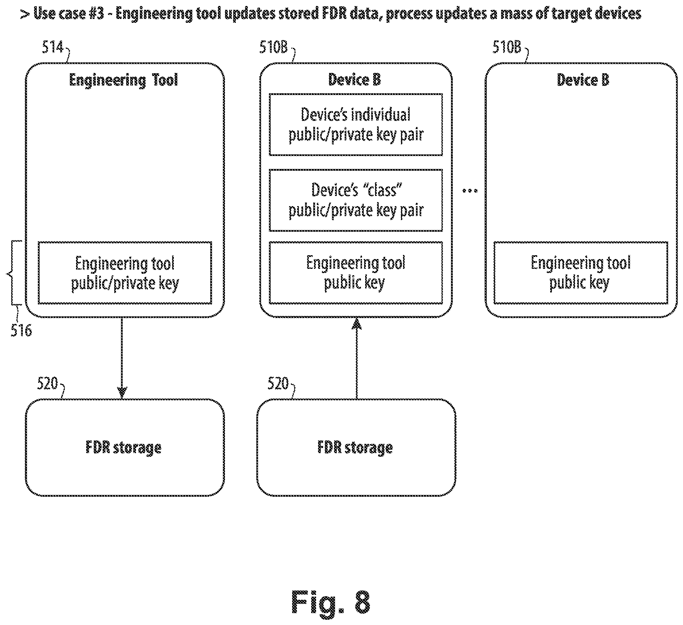

With reference to FIG. 4C, a flowchart is provided that shows an example method performed by a trusted tool (such as engineering tool 514 shown in FIGS. 7 and 8) for facilitating FDR to a plurality of devices, including providing signed FDR data sets to a remote FDR storage (such as FDR storage 520 shown in FIGS. 7 and 8) in order to configure one or more devices (such as device 510B shown in FIGS. 7 and 8).

At block 442 a cryptographic key is stored locally, wherein the cryptographic key is unique to or otherwise identifies the trusted tool or a group of tools to which the trusted tool belongs. At block 444 a tool-provided FDR data set is obtained or generated. When obtaining the tool-provided FDR data set from another source, the trusted tool can verify the source, such as by using additionally cryptographic keys that were previously stored locally by the trusted tool.

At block 446, the tool signs the tool-provided FDR data set using the trusted tool's locally stored cryptographic key. At block 448, the signed tool-provided FDR data set is stored remotely in the FDR storage.

At optional block 450, a command is transmitted. The command can be directed at the FDR storage and/or cause the FDR storage to cause an update to a selected data field of one device or a plurality of devices using a signed tool-provided replacement set.

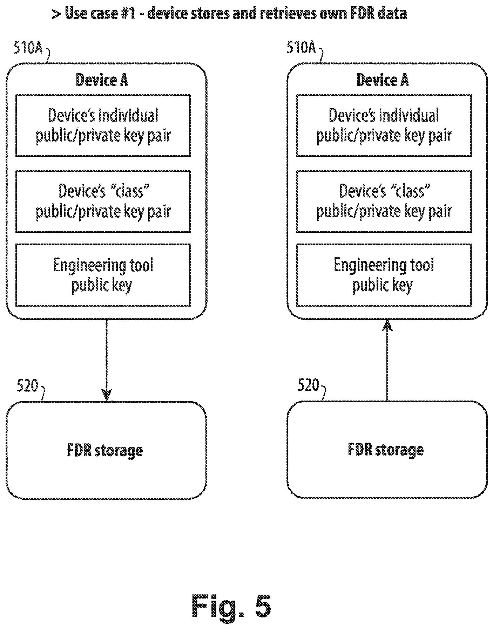

FIGS. 5-8 show different example use cases based on example logic applied by a target device, such as application by target device 110 shown in FIG. 1 of logic provided by acceptable source logic module 113. The example use cases are not intended to limit the disclosure, but rather to demonstrate how one of many possible use cases could be implemented. In each of FIGS. 5-8 the left column of the figure shows a storage phase in which an FDR dataset is stored by a data source (such as data source(s) 120 shown in FIG. 1) in an FDR storage device (such as FDR storage device 130 shown in FIG. 1). The right column of the figure shows a retrieval phase in which a signed FDR data set is retrieved from the FDR storage device to a target device (such as target device 110 shown in FIG. 1).

With reference to FIG. 5, in a first use case, a device 510A, labeled Device A, is configured and functions as a target device (having the structure and functionality of target device 110 in FIG. 1) and a source device (having the structure and functionality of source device 120 in FIG. 1). Device 510A stores a plurality of cryptographic keys, including verification keys (similar to cryptographic verification key set 114 shown in FIG. 1) and private keys, (similar to source private keys 127 shown in FIG. 1). The cryptographic keys shown in these examples include, without limiting the disclosure to specific cryptographic keys, the device's individual verification and private key pair, the device's class verification and private key pair, and a verification key for an engineering tool. It is noted that device 510A can store verification and private key pairs for more than one class and/or verification keys for more than one engineering tool.

During the storage phase, device 510A stores in FDR storage 520 a signed FDR set, including one or more candidate instances of FDR data, each instance of the FDR data signed by a different private source key of device 510A, such as the device's individual private key and a private key for the device's one or more classes. FDR storage 520 is configured and functions similarly to FDR storage 132 shown in FIG. 1. The respective different instances of FDR data can be different from one another, or can be identical. For example, the FDR data of an instance signed by one of the device's classes can set different features or provide different settings for the features than the FDR data of instance signed by a different of the device's class, the device itself, or one of the engineering tools.

During the retrieval phase, device 510A retrieves a signed FDR data set. Device 510A attempts to verify the signatures used to sign FDR data in the signed FDR data set using the verification keys stored by device 510A. Device 510A can apply logic to determine a hierarchy of the verification keys for determining an order in which the verification keys (individual, class(es), and/or engineering tool) are used for attempting the verification. In the use case shown in FIG. 5, consistent with the logic applied, the device 510A's individual private key is used to verify the signed FDR data. Device 510A thus concludes that it stored this FDR data and should use this FDR data.

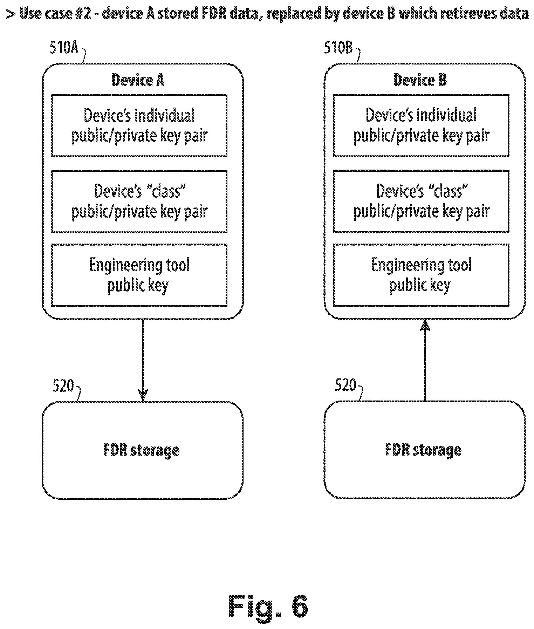

With reference to FIG. 6, in a second use case, a device 510A, labeled Device A, is configured and functions a source device (having the structure and functionality of source device 120 in FIG. 1). A device 510B functions as a target device (having the structure and functionality of target device 110 in FIG. 1). As in FIG. 5, device A stores a plurality of cryptographic keys, including private keys (similar to source private keys 127 shown in FIG. 1). Device 510A can store the verification keys that are paired with the private keys as well, in case it also functions as a target device, but that is not needed for this particular use case. Device 510B can store a plurality of cryptographic keys, including verification keys (similar to cryptographic verification key set 114 shown in FIG. 1). In this example, these verification keys would need to be paired with corresponding private keys stored by device 510A in order to be able to verify retrieved signed FDR data. Optionally, device 510B can also store the paired private key for each verification key.

During the storage phase, similar to the use first use case shown in FIG. 5, device 510A stores in FDR storage 520 a signed FDR set, including one or more candidate instances of FDR data, each instance of the FDR data signed by a different private source key of device 510A, such as the device's individual private key and a private key for the device's one or more classes.

During the retrieval phase, device 510B retrieves a signed FDR data set using the identifying information. Device 510B attempts to verify the signatures used to sign FDR data in the signed FDR data set using the verification keys stored by device 510B. Device 510B can apply logic to determine a hierarchy of the verification keys for determining an order in which the verification keys (individual, class(es), and/or engineering tool) are used for attempting the verification. In the use case shown in FIG. 6, consistent with the logic applied, the device 510B's class private key is used to verify the signed FDR data. Device 510B thus concludes that it did not store this FDR data, but a different device in its trusted class did, and device 510B further concludes that it should use this FDR data.

With reference to FIG. 7, in a third use case, an engineering tool 514 is configured and functions as a source device (having the structure and functionality similar to source device 120 in FIG. 1). A device 510B functions as a target device (having the structure and functionality of target device 110 in FIG. 1). Engineering tool 514 stores one or more cryptographic keys 516, including at least one private key (similar to source private keys 127 shown in FIG. 1).

In one or more embodiments, the cryptographic key(s) 516 can include a pair of keys, including a key (e.g., engineering tool 514's public key (which can remain secret) for performance of signature verification when retrieving stored information. In order to protect injection of malicious FDR data into engineering tool 514 (such as prior to engineering tool 514 signing the FDR data), cryptographic key(s) 516 can include keys for verifying one or more devices and/or classes of devices that may be sources of the FDR data that is stored by engineering tool 514.

Device 510B can store a plurality of cryptographic keys, including verification keys (similar to cryptographic verification key set 114 shown in FIG. 1). In this example, these verification keys would need to be paired with corresponding private keys stored by device 510A in order to be able to verify retrieved signed FDR data. Optionally, device 510B can also store the paired private key for each verification key.

During the storage phase, engineering tool 514 stores in FDR storage 520 a signed FDR set, including one or more candidate instances of FDR data, each instance of the FDR data signed by a different private source key of engineering tool 514.

During the retrieval phase, device 510B retrieves a signed FDR data set. Device 510B attempts to verify the signatures used to sign FDR data in the signed FDR data set using the verification keys stored by device 510B. Device 510B can apply logic to determine a hierarchy of the verification keys for determining an order in which the verification keys (individual, class(es), and/or engineering tool) are used for attempting the verification. In the use case shown in FIG. 7, consistent with the logic applied, the device 510B's engineering tool private key is used to verify the signed FDR data. Device 510B thus concludes that it did not store this FDR data, but a trusted engineering tool did, and device 510B further concludes that it should use this FDR data.

With reference to FIG. 8, an additional use case is provided that is similar to the use case in FIG. 7, except that multiple target devices 510B retrieve the signed FDR data set that was loaded in FDR storage 520 by engineering tool 514. During the storage phase, engineering tool 514 can store signed FDR data in FDR storage 520. This can be performed by a single storage operation. The signed FDR data can be configured to change one or more features of the target devices 150B, namely devices 510B. In the use case shown in FIG. 8, one feature of the respective target devices 510B is updated using the FDR operation.

A target device 510 B can be designed to accept a portion or subset of FDR data. For example, multiple target devices 510B in a site may have one thousand motor control center buckets. These target devices 510B are configured with the same network gateway. An event occurs necessitating a change to the IP address of the network gateway. An FDR data set having only a setting for the IP address of the network gateway can be created and signed by engineering tool 514 using a valid key. The signed FDR data set can be distributed to all of the multiple target devices to deploy this setting change.

During the retrieval phase, devices 510B retrieve or otherwise obtain a signed FDR data set from FDR storage 520. The amount of target devices 510B is not limited to a particular number. In this way, there can be 10s, 100s, or 1000s (or more) of target devices that can update this one feature using the signed FDR data set that was retrieved. The retrieval can be a push or pull operation.

Potential advantages provided by this use case include the ability for a user to operate engineering tool 514 to store an update for one or more settings by storing signed FDR data in FDR storage 520 during the storage phase, using a single storage operation. This update can be pushed or made available to multiple target devices 510B, providing the ability to perform a secure update to a small amount or a large mass of target devices 510B.

In an example scenario, the target devices 510B can be TeSys Ts^{™} devices. In some embodiments, the update can proceed autonomously, e.g., by pushing the update through a network of the TeSys Ts devices or by automatic, periodic update checks by the TeSys Ts devices. In addition to the time and human resources saved, the updated setting will be consistent on all TeSys Ts devices. The security of the update is strong, since the source device that provided the update is trusted and verified, in this example engineering tool 514, must be trusted and verified by each TeSys Ts device that is updated,

Additionally, respective target devices 510B can be configured with different logic to be applied, e.g., wherein the logic is applied by acceptable source logic module 113 shown in FIG. 1. This enables the respective target devices 510B to behave in accordance with its individual logic, such as by using different FDR data included in an FDR data set retrieved (pushed or pulled) by the corresponding target devices 510B or by deciding whether or not to allow a setting to be updated.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions.

These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart(s) and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the flowchart and/or block diagram block or blocks.

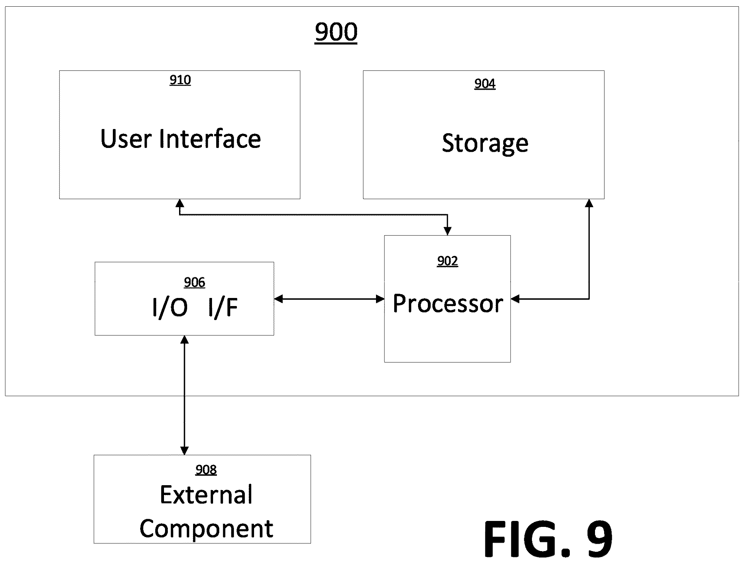

With reference to FIG. 9, a block diagram of an example processing system 900 is shown, which provides an example configuration of a computing system used by any of target device 120, data source 120, and FDR storage device 130 shown in FIG. 1 and devices 510A and 510B, engineering tool 514, and FDR storage 520 shown in FIGS. 5-8. Additionally, all or portions of the computing components of the FDR systems illustrated could be configured as software, and processing system 900 could represent such portions. Processing system 900 is only one example of a suitable system and is not intended to suggest any limitation as to the scope of use or functionality of embodiments of the disclosure described herein. Processing system 900 can be implemented using hardware, software, and/or firmware. Regardless, processing system 900 is capable of being implemented and/or performing functionality as set forth in the disclosure.

Processing system 900 is shown in the form of a general-purpose computing device. Processing system 900 includes a processing device 902, memory 904, an input/output (I/O) interface (I/F) 906 that can communicate with an internal component, such as a user interface 910, and optionally an external component 908.

In certain embodiments, processing device 902 can include, for example, a PLOD, microprocessor, DSP, a microcontroller, a field programmable gate array (FPGA), an application specific integrated circuit (ASIC) and/or other discrete or integrated logic circuitry having similar processing capabilities.

In certain embodiments, processing device 902 and the memory 904 can be included in components provided in an FPGA, ASIC, microcontroller, or microprocessor, for example.

Memory 904 can include, for example, volatile and non-volatile memory for storing data temporarily or long term, and for storing programmable instructions executable by the processing device 902. Memory 904 can be a removable (e.g., portable) memory for storage of program instructions. I/O I/F 906 can include an interface and/or conductors to couple to the one or more internal components 910 and/or external components 908.

In certain embodiments, I/O I/F 906 can be a two-wire connection of an APL edge device, the two-wire connection being configured for communicating with components of a local network of the APL edge device and for accessing a remote network.

Embodiments of the computing components of the industrial system may be implemented or executed by one or more computer systems, such as a microprocessor. Each processing system 900 can be included within the computing components of the industrial system, or multiple instances thereof.

In certain embodiments, processing system 900 is embedded 9 in a host device, such as an edge device. Portions of the processing system 900 can be provided externally, such by way of an interface.

Processing system 900 is only one example of a suitable system and is not intended to suggest any limitation as to the scope of use or functionality of embodiments of the disclosure described herein. Regardless, processing system 900 is capable of being implemented to perform any of the functionality set forth hereinabove.

Processing system 900 may be described in the general context of execution of computer system-executable instructions, such as program modules. Generally, program modules may include routines, programs, objects, components, logic, data structures, and so on that perform particular tasks or implement particular abstract data types.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

The various embodiments disclosed herein may be implemented as a system, method, or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein, but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method performed by a device coupled to a network for performing fast device replacement (FDR), the method comprising:
storing a cryptographic key set;
accessing at least one signed replacement data set provided to an FDR storage device by respective one or more sources;
verifying a source that provided a particular signed replacement data candidate of the at least one signed replacement data set that was accessed by verifying a cryptographic signature used to sign the particular signed replacement data candidate using a cryptographic algorithm and the stored cryptographic key set; and
allowing fast device replacement using replacement data of the particular signed replacement data candidate pending verification of its associated cryptographic signature.

2. The method claim 1,
wherein each cryptographic key of the cryptographic key set is associated with a type of the source, and the type of the source associated with the cryptographic key of the cryptographic key set used to verify the source is identified as the type of the source,
wherein the method further comprises applying rules that define one or more conditions and/or a hierarchy of different types of sources associated with respective cryptographic keys of the cryptographic key set, and
wherein allowing the fast device replacement using the replacement data of the particular signed replacement data candidate is governed by the rules.

3. The method of claim 2, wherein
when the one or more conditions include the device is being newly coupled to the network, the rules allow the replacement when the type of source identified is a class of devices to which the device belongs or a trusted tool; and
when the one or more conditions include the device has been previously coupled to the network, the rules allow the replacement when the type of source identified is the device or the trusted tool, and/or
wherein the device is configured with the rules as a factory setting or via user configuration.

4. The method of claim 1, wherein each cryptographic key of the cryptographic key set is associated with identification and/or a type of the source, wherein the method further comprises recording an indication of whether the verification was successful with the identification and/or type of the source associated with a cryptographic key of the cryptographic key set that was used for verifying the source.

5. The method of claim 2, wherein the type of the source identified is a class of the source or a trusted tool, and when the type of the source identified is the class of the source, verifying the source further includes determining whether the class of the source belongs to an allowable class of devices for the device, and when the type of the source identified is a trusted tool, verifying the source further includes determining whether the trusted tool is trusted by the device, and/or
further comprising:
storing device replacement data;
signing the device replacement data using a device key that is unique to the device and is included with the cryptographic key set; and
configuring the FDR storage device by causing to be stored the signed device replacement data with the signed replacement data set in the FDR storage device.

6. The method of claim 1, wherein the cryptographic key set, the keys used for signing the signed replacement data included in the signed replacement data set, and the cryptographic algorithm are configured to use asymmetric keys or use symmetric keys with a keyed hash, and/or
further comprising requesting performance of an FDR procedure using replacement data from the FDR storage device, wherein the at least one signed replacement data set is accessed responsive to the request, and/or
wherein the particular signed replacement data candidate includes an update to a selected data field of a plurality of data fields stored by the device, and allowing the fast device replacement includes updating the selected data field using the particular signed replacement data candidate,
wherein in particular the device is a plurality of devices, and wherein the source is configured to provide the particular signed replacement data candidate to the FDR storage device one time for causing an update to the selected data field of each of the plurality of devices,
wherein in particular a command causes the plurality of devices to access the particular candidate replacement data set by a PUSH action from the FDR storage device or a PULL action from the plurality of devices.

7. A method performed by a fast device replacement (FDR) storage device for providing a replacement data set to a device when the device is coupled to a network, the method comprising:
storing a plurality of signed replacement data sets, each replacement data set signed by a corresponding source using the source's cryptographic key and having a corresponding data identifier that identifies the replacement data set; and
providing to a device one or more candidate signed replacement data sets from the plurality of signed replacement data sets,
wherein the respective one or more candidate replacement data sets are evaluated by the device using a cryptographic algorithm and locally stored cryptographic verification key via one or more attempts to verify any of the one or more candidate signed replacement data sets, and the device is configured to allow fast device replacement only when using the one or more candidate replacement data sets that were verified.

8. The method of claim 7, wherein the respective source's cryptographic keys are private keys that identify the source or a class of the source, and/or
further comprising:
receiving a request for a replacement data set from a device of a plurality of candidate devices, the request including an indication of an aspect of the device; and
selecting the candidate replacement data sets from the plurality of replacement data sets uses the indication of the aspect of the device,
wherein the aspect of the device in particular includes identification of the device or identification of a class of the device.

9. The method of claim 7 or 8, wherein the one or more candidate replacement data sets includes an update to a selected data field of a plurality of data fields stored by the device, and when the device allows the fast device replacement using a particular candidate signed replacement data set, the selected data field is caused to be updated using the particular signed candidate replacement data set.

10. The method of claim 9, wherein providing to the device one or more candidate signed replacement data sets includes providing the one or more candidate signed replacement data sets to a plurality of devices, and wherein the plurality of devices are configured to evaluate the one or more candidate signed replacement sets using the cryptographic algorithm and their corresponding locally stored cryptographic verification key to attempt to verify any of the one or more candidate replacement data sets, and the respective plurality of devices are configured to allow fast device replacement only when using the one or more candidate signed replacement data sets that were verified by the corresponding device,
in particular further comprising receiving a command, wherein providing the one or more candidate replacement data sets to the plurality of devices is performed responsive to the command by a PUSH action.

11. A method performed by a trusted tool, the method comprising:
storing locally a cryptographic key that is unique to or otherwise identifies the trusted tool or a group of tools to which the trusted tool belongs;
obtaining or generating a tool-provided replacement data set;
signing the tool-provided replacement data set using the cryptographic key; and
storing remotely in a fast device replacement (FDR) storage device the signed tool-provided replacement data set,
wherein a device of a plurality of devices coupled to a network is configured to access the signed tool-provided replacement data set from a plurality of replacement data sets stored by the FDR storage device, and the device is configured to allow fast device replacement only when using the signed tool-provided replacement data set if the device successfully uses a cryptographic algorithm and a verification cryptographic key stored locally by the device to verify the signed tool-provided replacement data set.

12. The method of claim 11, wherein the tool-provided replacement data set includes an update to a selected data field of a plurality of data fields stored by the device, wherein the device includes one or more devices, and the one or more devices are configured to allow the fast device replacement for updating the selected data field using the tool-provided replacement data set,
in particular further comprising commanding the FDR storage device to cause the update to the selected data field of the plurality of devices using the signed tool-provided replacement set.

13. A computer system of the device recited in claim 1, the computer system comprising:
a memory configured to store a plurality of programmable instructions; and
a processing device in communication with the memory, wherein the processing device, upon execution of the plurality of programmable instructions is configured to perform the method of claim 1.

14. A storage system of the FDR storage device recited in claim 7, the storage system comprising:
a memory configured to store a plurality of programmable instructions; and
a processing device in communication with the memory, wherein the processing device, upon execution of the plurality of programmable instructions is configured to perform the method of claim 7.

15. A computer system of the trusted tool recited in claim 11, the computer system comprising:
a memory configured to store a plurality of programmable instructions; and
a processing device in communication with the memory, wherein the processing device, upon execution of the plurality of programmable instructions is configured to perform the method of claim 11.
